# EUROPÄISCHE PATENTSCHRIFT

(11) **EP 2 643 532 B1**
(45) Veröffentlichungstag und Bekanntmachung des Hinweises auf die Patenterteilung: **01.09.2021**
(21) Anmeldenummer: 11785684.9
(22) Anmeldetag: 22.11.2011
(51) Int. Cl.: E04F 15/02, B32B 3/02

(54) **FUßBODENPANEEL MIT WEICHELASTISCHER NUTZSCHICHT**
FLOORING PANEL WITH SOFT ELASTIC WEAR LAYER
PANNEAU DE PLANCHER AVEC COUCHE D'USURE SOUPLE, ELASTIQUE

(30) Priorität: 23.11.2010 DE 202010015754 U
(43) Veröffentlichungstag der Anmeldung: 02.10.2013
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Lippert Stachow Patentanwälte Rechtsanwälte
(86) Internationale Anmeldenummer: PCT/EP2011/070701
(87) Internationale Veröffentlichungsnummer: WO 2012/069485

(56) Entgegenhaltungen:
- WO-A1-01/51733
- WO-A1-97/47834
- DE-A1- 10 201 087
- DE-U1-202008 010 555
- None

## Beschreibung

Die Erfindung betrifft ein Fußbodenpaneel umfassend eine Trägerschicht, eine aus einem weichelastischen Material gebildete Nutzschicht sowie wenigstens zwei einander gegenüberliegende Paare von Verriegelungskanten, wobei zumindest die Verriegelungskanten eines Paares als Formschlusskanten ausgebildet und so gestaltet sind, dass zwei der Fußbodenpaneele mittels dieser Formschlusskanten verbindbar sind, und wobei die Formschlusskanten je eine Horizontalverriegelungsfläche aufweisen, die im verbundenen Zustand gemeinsam einem Auseinanderbewegen der Fußbodenpaneele in einer Richtung entgegenwirken, die in der Fußbodenebene und senkrecht zu den Formschlusskanten liegt, wobei jede Formschlusskante im Bereich der weichelastischen Nutzschicht einen Fugendichtungsbereich aufweist.

Es sind Fußbodenpaneele bekannt, deren Nutzschicht aus Kork, Linoleum oder einem Kunststoff gebildet ist, um die gewünschte weichelastische Eigenschaft zu erzeugen. Zwecks einfacher Montage weisen die Fußbodenpaneele formschlüssig verbindbare Verriegelungskanten auf, die sich für eine leimlose Herstellung eines Fußbodenbelags eignen.

Außer Fußbodenpaneelen mit weichelastischer Nutzschicht, sind für die Herstellung eines Fußbodenbelags auch sogenannte Laminatpaneele mit härteren Nutzoberflächen bekannt. Die harten Nutzschichten sind im Vergleich zu weichelastischen Nutzschichten sehr dünn. Hierunter gibt es ebenfalls vielerlei Ausführungsformen, die sich für eine leimlose Verlegung eines Fußbodenbelags eignen. Diese Laminatpaneele werden herstellerübergreifend als Klicklaminat bezeichnet. Die Verriegelungskanten von Klicklaminat sind so gestaltet, dass sie eine formschlüssige, zuweilen einrastende Verbindung ermöglichen. Die Bezeichnung Klicklaminat setzt sich mittlerweile als Synonym für schnelle und einfache Herstellbarkeit eines Fußbodenbelags durch und wird im weitesten Sinn auch für Fußbodenpaneele verwendet, die eine weichelastische Nutzschicht aufweisen oder eine weichelastische Schicht an anderer Stelle innerhalb eines mehrere Schichten umfassenden Fußbodenpaneels.

Die unterschiedlichen von Klicklaminat bekannten Ausführungsformen von Verriegelungskanten können in der Regel auch an Fußbodenpaneelen angebracht werden, die mit einer weichelastischen Nutzschicht versehen sind. Hierbei sind jedoch besondere Effekte zu beachten, die sich bei der Produktion der Verriegelungskanten sowie bei der Verlegung, d.h. bei der Verbindung komplementärer Verriegelungskanten, auswirken.

Die EP 1 634 696 A1 beschreibt sogenannte Bodenbelagelemente, unter anderem ein Bodenbelagelement mit einer Trägerschicht und einer weichelastischen Nutzschicht. Dieser Stand der Technik würdigt schwimmend verlegbare Bodenbelagelemente sowie auch Klicklaminat, bei dem ein Paneel in das andere einrastet. Die Lehre der EP 1 634 696 A1 stellt auf den Schichtaufbau eines Bodenbelagelements ab und schweigt zur Gestaltung der Paneelkanten.

Für die Herstellung von Verriegelungskanten an Fußbodenpaneelen werden vielfach zerspanende Fertigungsverfahren verwendet, beispielsweise Sägen oder Fräsen. Die weichelastische Nutzschicht wird beim Zerspanen elastisch verformt. Taucht beispielsweise ein Kreissägeblatt in eine weichelastische Nutzschicht ein, so wird diese durch die Vorschubbewegung des Kreissägeblatts eingedrückt. Ein Fräswerkzeug drückt die weichelastische Nutzschicht ebenfalls ein. Im Bereich der Zerspanungsstelle wird das weichelastische Material bereichsweise gedehnt und in anderen Bereichen gestaucht. Wenn der Zerspanungsvorgang beendet ist, kehrt die elastische Verformung zurück. Die auf diese Weise erzeugten Flächen entsprechen nach Rückgang der elastischen Verformung nicht derjenigen Kontur, die mit dem Zerspanungswerkzeug abgefahren worden ist.

Das Werksstoffverhalten der weichelastischen Nutzschicht erschwert es, Verriegelungskanten an Fußbodenpaneelen so zu bearbeiten, dass aneinandergrenzende weichelastische Nutzschichten verbundener Fußbodenpaneele einander glatt berühren und keine offenen Fugen gebildet werden. Sofern offene Fugen entstehen, kann sich Schmutz sammeln, und Feuchtigkeit kann zwischen die Verriegelungskanten eindringen.

Aus der DE 102 01 087 A1 ist ein gattungsgemäßes Fußbodenpaneel mit verbindbaren Formschlusskanten bekannt. Die Formschlusskanten weisen im Bereich einer Nutzschicht zwei sog. Stoßkanten auf. Die Stoßkanten liegen im verbundenen Zustand zweier Paneele stumpf aneinander. Sie sind bei diesem Stand der Technik relativ zum Lot um einen Winkel α schräg und parallel zueinander angeordnet.

Der Erfindung liegt die Aufgabe zugrunde, ein Fußbodenpaneel der eingangs genannten Gattung vorzuschlagen, das eine bessere Dichtungswirkung ermöglichen soll.

Erfindungsgemäß wird die Aufgabe mit einem Fußbodenpaneel gemäß Patentanspruch 1 gelöst. Vorteilhafte Weiterbildungen ergeben sich aus den abhängigen Patentansprüchen.

Die Horizontalverriegelungsflächen des erfindungsgemäßen Fußbodenpaneels und die Fugendichtungsbereiche sind so aufeinander abgestimmt, dass im verbundenen Zustand zweier Fußbodenpaneele eine Vorpressung der Fugendichtungsbereiche gegeneinander und dadurch im Bereich der Nutzschicht eine dicht gepresste Fuge erzeugbar ist, wobei die Fugendichtungsbereiche jeweils als Dichtungslippen ausgebildete hervorstehende Stauchungsbereiche sind und nahe an der Oberseite der Nutzschicht in einer Spitze enden, wobei die Kontur des Fugendichtungsbereichs der Nutzschicht eine relativ zur Nutzoberfläche schräg angeordnete Fläche ist, und wobei diese schräg angeordnete Fläche zur Nutzoberfläche hin spitz zuläuft.

Die Fugendichtungsbereiche werden mit Zerspanungswerkzeugen hergestellt. Diese werden so ausgewählt und/oder für den Zerspanungsvorgang so eingestellt, dass dann, wenn die elastische Verformung der weichelastischen Nutzschicht nach Beendigung des Zerspanungsvorgangs zurückgegangen ist, die gewünschte Kontur des Fugendichtungsbereichs der Nutzschicht entsteht. Die so entstandene Kontur gewährleistet eine Berührung und Vorpressung der Fugendichtungsbereiche im verriegelten Zustand zweier Fußbodenpaneele.

Die gewünschte Kontur des Fugendichtungsbereichs kann durch ein Zerspanungswerkzeug hergestellt werden, das eine entsprechende Geometrie aufweist, welche die elastische Verformung der Nutzschicht während des Zerspanungsvorgangs berücksichtigt. Alternativ kann durch eine entsprechende Positionseinstellung des Zerspanungswerkzeugs Einfluss genommen werden auf die elastische Verformung der weichelastischen Nutzschicht, damit im fertigen Zustand, nach Rückgang der elastischen Verformung, die gewünschte Kontur des Fugendichtungsbereichs erzielt wird.

Zumindest an einer der Formschlusskanten kann der Fugendichtungsbereich der Nutzschicht mit einem Klebemittel versehen sein.

Zweckmäßig ist das Klebemittel während der Verlegung der Fußbodenpaneele aktivierbar.

Ein weiterer Nutzen wird darin gesehen, dass das Klebemittel zwei Klebemittelkomponenten aufweist.

Die erste Klebemittelkomponente kann im Fugendichtungsbereich einer ersten Formschlusskante des Fußbodenpaneels vorgesehen sein, und die zweite Klebemittelkomponente kann im Fugendichtungsbereich der gegenüberliegenden zweiten Formschlusskante des Fußbodenpaneels vorgesehen sein. Nachstehend sind Ausführungsbeispiele der Erfindung in einer Zeichnung beispielhaft dargestellt und anhand mehrerer Figuren detailliert beschrieben. Es zeigen:
- Fig. 1: den Beginn der Herstellung von Verriegelungskanten an Fußbodenpaneelen, die eine weichelastische Nutzschicht aufweisen,
- Fig. 2: zwei durch einen Trennschnitt erzeugte Paneelkanten,
- Fig. 3: eine Formschlusskante mit modifiziertem Nutprofil, das eine Horizontalverriegelungsfläche aufweist,
- Fig. 4: die Formschlusskante gemäß Fig. 3 sowie eine komplementäre Formschlusskante während einer drehenden Fügebewegung,
- Fig. 5: die Formschlusskanten gemäß Fig. 4 im verbundenen, beziehungsweise verriegelten Zustand,
- Fig. 6: eine alternative Ausführung zweier Formschlusskanten im verbundenen, beziehungsweise verriegelten Zustand,
- Fig. 7: zwei Formschlusskanten mit Hakenprofilen, die mittels einer vertikalen Bewegung beziehungsweise Bewegungskomponente zu verhaken sind,
- Fig. 8: eine Draufsicht auf ein Fußbodenpaneel mit vier Paneelkanten und mit einem ersten Paar Formschlusskanten an zwei gegenüberliegenden Verriegelungskanten und mit einem zweiten Paar anderer Formschlusskanten an den beiden übrigen gegenüberliegenden Verriegelungskanten.

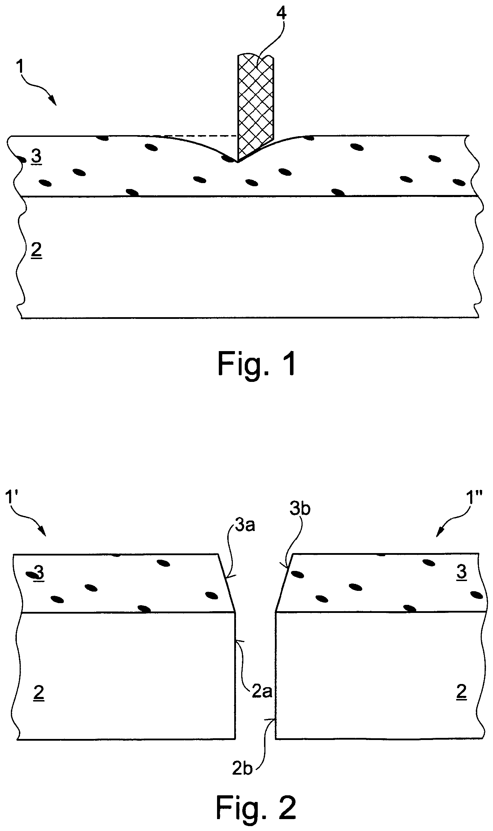

Die Figuren 1 und 2 stellen den Beginn einer Herstellung von Verriegelungskanten an Fußbodenpaneelen dar, nämlich das Trennen einer größeren Platte 1 in einzelne Plattenstücke 1' und 1", die anschließend mit Verriegelungskanten versehen und zu Fußbodenpaneelen weiterverarbeitet werden. Die Platte 1 weist eine Trägerschicht 2 und darauf eine weichelastische Nutzschicht 3 auf. Anhand der Figuren 1 und 2 wird das technische Problem verdeutlicht, das die Bearbeitung einer Platte 1 mit sich bringt, wenn diese eine weichelastische Nutzschicht 3 aufweist.

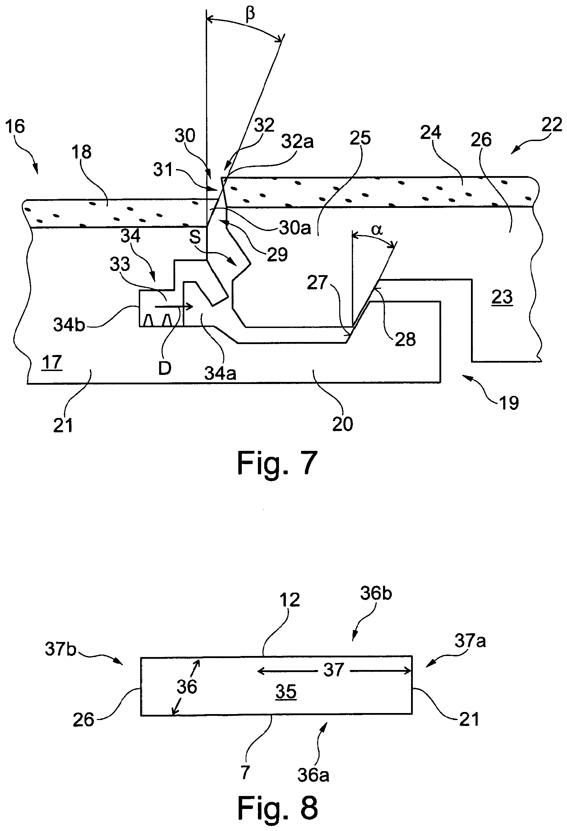

Aus der weiteren Beschreibung ist ersichtlich, es weisen nicht alle in den Figuren dargestellten Ausführungsbeispiele alle Merkmale des Patentanspruchs 1 auf. Entsprechende Ausführungsbeispiele beziehen sich auf Paare von Verriegelungskanten, die in Kombination mit Ausführungsbeispielen gemäß Anspruch 1 verwendbar sind, wie zum Beispiel anhand von Fig. 8 erläutert.

Fig. 1 zeigt ein Sägeblatt 4, mit dem die Platte 1 durchtrennt wird. Das Sägeblatt 4 führt eine Schnittbewegung und eine Vorschubbewegung aus. Durch die Vorschubbewegung wird die weichelastische Nutzschicht 3 zusammengedrückt. Durch das Zusammendrücken wird die Nutzschicht 3 im Bereich der Zerspanungsstelle bereichsweise gedehnt und bereichsweise gestaucht/komprimiert.

Wenn das Sägeblatt 4, wie in Fig. 2 dargestellt, die Platte 1 durchtrennt hat, ist die vorübergehende elastische Verformung der weichelastischen Nutzschicht 3 wieder gewichen. Durch den Trennschnitt sind im Bereich der Nutzschicht 3 Trennflächen 3a und 3b entstanden, die in Bezug auf die Ebene, in der die Vorschubbewegung des Sägeblatts 4 stattfindet, schräg liegen. Die Trennflächen 3a und 3b liegen einander etwa keilförmig gegenüber.

Im Unterschied dazu liegen die im Bereich der Trägerschicht 2 entstandenen Trennflächen 2a und 2b, wie in Fig. 2 erkennbar, parallel zueinander und auch parallel zur Ebene der Vorschubbewegung des Sägeblatts 4.

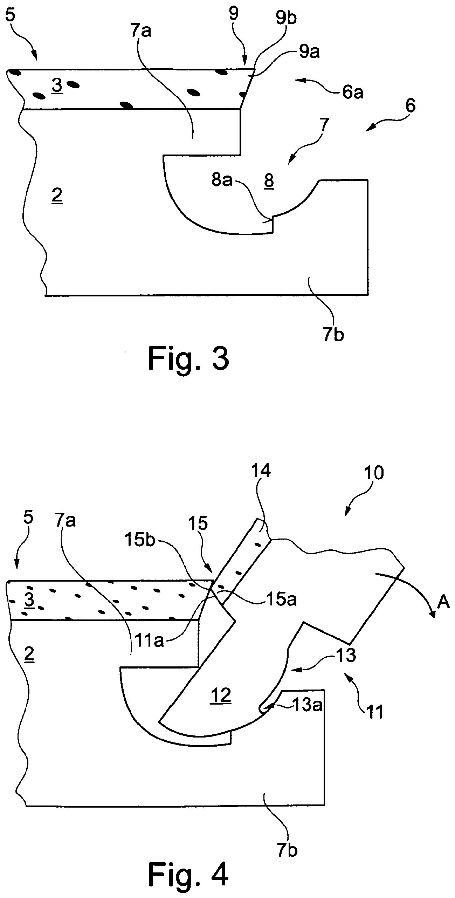

In Fig. 3 ist ein Fußbodenpaneel 5 ausschnittsweise dargestellt. Es weist eine Formschlusskante 6 auf, die mit einem modifizierten Nutprofil 7 versehen ist. Das Fußbodenpaneel 5 weist eine komplementäre Formschlusskante mit modifiziertem Federprofil auf, die in der ausschnittsweisen Darstellung gemäß Fig. 3 jedoch weggelassen worden ist. Im Bereich der weichelastischen Nutzschicht 3 ist ein Fugendichtungsbereich 6a ausgebildet. Das Fußbodenpaneel 5 ist in Fig. 3 in liegender Position dargestellt, wobei auf die Darstellung des Untergrunds verzichtet wird.

Das Nutprofil 7 weist eine in horizontaler Richtung angeordnete, das heißt, in der Ebene des/der Fußbodenpaneele 5 wirksame Hinterschneidung 8 auf, mit der einem ebenen Auseinanderbewegen liegender verbundener Fußbodenpaneele senkrecht zur Formschlusskante entgegengewirkt wird. Die obere Nutwand 7a ist kürzer als die untere Nutwand 7b. Die Nutwand 7b weist zum Zweck der horizontalen Verriegelung eine Horizontalverriegelungsfläche 8a auf. Der Fugendichtungsbereich 6a der weichelastischen Nutzschicht 3 ist mit einem hervorstehenden Stauchungsbereich 9 versehen, der eine Dichtungslippe 9a bildet. In diesem Ausführungsbeispiel ragt die Dichtungslippe 9a mit einer Spitze 9b distal von dem Paneelkörper hervor. Die Spitze 9b ist an der Oberfläche der Nutzschicht 3 angeordnet, welche die Nutzoberfläche des Fußbodenpaneels 5 bildet.

Ein zweites gleichartiges Fußbodenpaneel 10 kommt in Fig. 4 hinzu. Dargstellt ist die komplementäre Formschlusskante 11 des zweiten Fußbodenpaneels 10, die mit dem modifizierten Federprofil 12 versehen ist. Das zweite Fußbodenpaneel 10 ist in Fig. 4 relativ zu dem ersten liegenden Fußbodenpaneel 5 schräg gehalten, so dass sein Federprofil 12 in das Nutprofil 7 des ersten Fußbodenpaneels 5 hineinragt. Das Federprofil 12 weist eine Hinterschneidung 13 auf und ist mit einer Horizontalverriegelungsfläche 13a versehen, welche im verriegelten Zustand der beiden Fußbodenpaneele 5 und 10 mit der Horizontalverriegelungsfläche 8a des Nutprofils 7 des anderen Fußbodenpaneels 5 in Kontakt ist. Im Bereich einer weichelastischen Nutzschicht 14 weist die Formschlusskante 11 ebenfalls einen Fugendichtungsbereich 11a auf. Der Fugendichtungsbereich 11a weist einen Stauchungsbereich 15 auf, der eine Dichtungslippe 15a bildet. Diese ist ebenso mit einer Spitze 15b versehen, wie die Dichtungslippe 9a des Nutprofils 7.

Der verriegelte Zustand wird durch eine drehende Fügebewegung erreicht, für die das zweite Fußbodenpaneel 10 in Richtung des Pfeils A bis in die Ebene des ersten Fußbodenpaneels 5 herabgeschwenkt wird. Dadurch kommen die komplementären Formschlusskanten 6 und 11 in Eingriff und verriegeln die Fußbodenpaneele 5 und 10 formschlüssig miteinander.

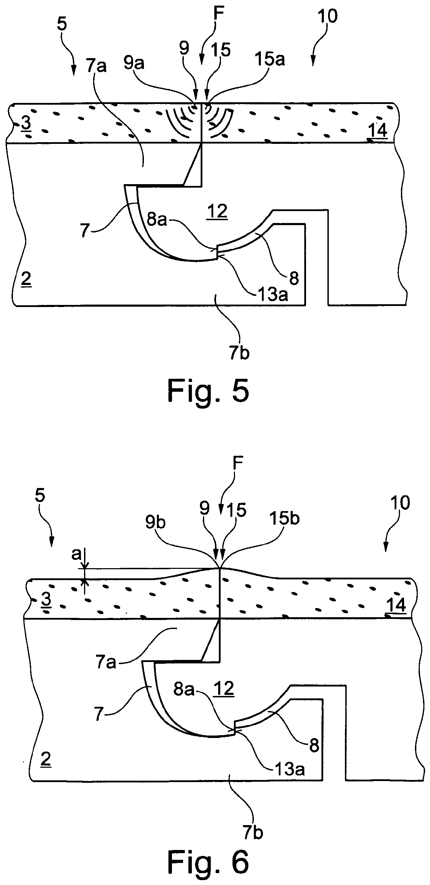

Der verriegelte Zustand ist in den folgenden Figuren 5 und 6 gezeigt. Nach Fig. 5 ist eine formschlüssige Verriegelung entstanden, bei der die Horizontalverriegelungsfläche 13a des Federprofils 12 in Kontakt ist mit der Horizontalverriegelungsfläche 8a des Nutprofils 7. Außerdem ist zu erkennen, dass die Dichtungslippe 9a des Fugendichtungsbereichs 6a mit der Dichtungslippe 15a des Fugendichtungsbereichs 11a in Kontakt ist. Die Strichsymbole ((( ))) in Fig. 5 deuten an, dass eine Vorpressung der Fugendichtungsbereiche 6a/11a vorhanden ist, welche eine Stauchung beziehungsweise Komprimierung oder Verdichtung des weichelastischen Materials der Nutzschicht 3 beziehungsweise 14 im Bereich der Fuge F erzeugt. Gemäß Fig. 5 sind die Dichtungslippen 9a/15a so gestaltet, dass die Stauchung ausreichend gering ist, um im Bereich der Fuge F keine Aufwölbung der Fußbodenoberfläche zu erhalten.

Fig. 6 zeigt ein alternatives Ausführungsbeispiel, bei dem die Dichtungslippen 9a/15a so gestaltet sind, dass die Vorpressung eine solche Stauchung erzeugt, die eine gewisse Aufwölbung a der Fußbodenoberfläche im Bereich der Fuge F bewirkt. Wenn die Aufwölbung a gering gehalten wird, kann sie vorteilhaft als Indikator für eine vorhandene Vorpressung dienen. Eine hohe Aufwölbung ist jedoch zu vermeiden, weil die aufgewölbten Fugenbereiche zu schnell abnutzen würden.

Fig. 7 zeigt ausschnittsweise zwei gleichartige Fußbodenpaneele. Das Fußbodenpaneel 16 weist eine Trägerschicht 17 und eine weichelastische Nutzschicht 18 auf. Ausschnittsweise ist nur seine Verriegelungskante 19 gezeigt. Die gegenüberliegende komplementäre Verriegelungskante des Fußbodenpaneels 16 ist weggelassen. Die Verriegelungskante 19 ist als Formschlusskante 20 ausgebildet und weist ein unteres Hakenprofil 21 auf. Die komplementäre nicht gezeigte Verriegelungskante des Fußbodenpaneels 16 entspricht derjenigen des dargestellten zweiten Fußbodenpaneels 22. Dieses weist eine Trägerschicht 23 und eine weichelastische Nutzschicht 24 auf. Ausschnittsweise ist hier die Formschlusskante 25 dargestellt, die ein oberes Hakenprofil 26 aufweist.

Das untere Hakenprofil 21 ist im verhakten Zustand von dem oberen Hakenprofil 26 des Fußbodenpaneels 22 verdeckt.

Die Hakenprofile 21 und 26 sind mittels einer vertikalen Bewegung beziehungsweise mittels einer vertikalen Bewegungskomponente miteinander zu verhaken. Mit vertikal ist eine Bewegungskomponente senkrecht zur Paneelebene gemeint. Das untere Hakenprofil 21 weist eine Horizontalverriegelungsfläche 27 auf und das obere Hakenprofil 26 ist mit einer Horizontalverriegelungsfläche 28 versehen. Im verbundenen Zustand der beiden Fußbodenpaneele 16 und 22 haben die Horizontalverriegelungsflächen 27 und 28 Kontakt und wirken so einem Auseinanderbewegen der Fußbodenpaneele 16 und 22 in einer Richtung entgegen, die in der Fußbodenebene und senkrecht zu den Formschlusskanten 20/25 liegt.

Die Formschlusskante 20 weist an der weichelastischen Nutzschicht 18 einen Fugendichtungsbereich 29 auf, der als Stauchungsbereich 30 ausgeführt ist. Der Stauchungsbereich 30 bildet eine Dichtungslippe 30a. Gleichfalls weist die Formschlusskante 25 des Fußbodenpaneels 22 einen Fugendichtungsbereich 31 auf, der als Stauchungsbereich 32 ausgeführt ist und eine Dichtungslippe 32a bildet. Im verhakten Zustand der Hakenprofile 21/26 werden die Dichtungslippen 30a/32a gegeneinander gedrückt und gestaucht und erzeugen so eine dichte Fuge F.

Die Horizontalverriegelungsfläche 27 des unteren Hakenprofils 21 ist gemäß Fig. 7 nicht senkrecht zur Paneeloberfläche angeordnet, sondern um einen Winkel α aus der Senkrechten gekippt, dass heißt senkrecht zur Paneelebene gekippt. Die Horizontalverriegelungsfläche 28 des oberen Hakenprofils 26 ist parallel zur Horizontalverriegelungsfläche 27, dass heißt, um denselben Winkel α aus der Senkrechten gekippt, so dass die beiden Horizontalverriegelungsflächen im verhakten Zustand aneinander anliegen.

Die Dichtungslippe 30a des Fußbodenpaneels 16 ist um den Winkel β aus der Senkrechten gekippt. Das gleiche gilt für die Dichtungslippe 32a, die symmetrisch zur Dichtungslippe 30a angeordnet ist.

Die Dichtungslippen 30a/32a lassen sich umso schonender in Kontakt bringen, je größer der Winkel α ist. Für den Winkel α werden Werte im Bereich von 5° bis 45° und für den Winkel β Werte im Bereich von 1° bis 5° bevorzugt. Die horizontale Verriegelungswirkung ist am besten, wenn für den Winkel α die untere Grenze von 5° vorgesehen ist. Dann werden aber die Dichtungslippen während der Fügebewegung stärker verformt als dann, wenn ein größerer Winkel α vorgesehen ist. Dies, weil ein größerer Winkel α mehr Freiraum für die Fügebewegung schafft. Wenn mehr Freiraum für die Fügebewegung vorhanden ist, reiben die Dichtungslippen 30a/32a weniger stark aneinander und die Fügebewegung geht schonender vonstatten. Als günstiger Kompromiss hat es sich erwiesen, wenn der Winkel α = 16° kombiniert wird mit einem Winkel β = 2°.

Für die Verriegelung senkrecht zur Paneelebene ist ein separates Sperrelement 33 vorgesehen. Das separate Sperrelement 33 ist in einer Nut 34 aufgenommen, die in distaler Richtung geöffnet ist. Die distale Richtung ist durch den Pfeil D kenntlich gemacht. In Bezug auf ihre Nutöffnung 34a ist der Nutgrund 34b proximal angeordnet. Die Nut 34 erstreckt sich in die Trägerschicht 17 des Fußbodenpaneels 16 hinein. Die komplementäre Formschlusskante des Fußbodenpaneels 16 ist nicht dargestellt. Sie entspricht jedoch der beim des Fußbodenpaneel 22 dargestellten Formschlusskante 25 mit dem oberen Hakenprofil 26. Das obere Hakenprofil weist eine Sperrnut S für das separate Sperrelement 33 auf. Die Sperrnut S ist so gestaltet, dass sich das separate Sperrelement 33 der Hakenprofile im verhakten Zustand teilweise in der Nut 34 und teilweise in der Sperrnut S befindet oder zumindest nach der Verhakung der Hakenprofile so eingefügt werden kann, dass es sich teilweise in der Nut 34 und teilweise in der Sperrnut S befindet.

Das separate Sperrelement kann außer der in Fig. 7 dargestellten funktionalen Gestaltung auch unterschiedliche andere Gestaltungen aufweisen. Es kann federelastisch ausgebildet sein und automatisch in eine Sperrnut einrasten. Alternativ kann das separate Sperrelement so gestaltet sein, dass es erst durch eine seitliche Verschiebung innerhalb der aufnehmenden Nut in die Sperrnut bewegt wird und eine Verriegelungswirkung herbeiführt. Die seitliche Verschiebung kann mit elastischer Verformung vonstattengehen oder ohne. Das separate Sperrelement kann so gestaltet sein, dass es sich applizieren lässt, bevor die Hakenprofile miteinander verhakt werden, wie beispielsweise in Fig. 7 gezeigt. Alternativ kann das separate Sperrelement so gestaltet sein, dass es nach der Verhakung der Hakenprofile montierbar ist. Beispiele für separate Sperrelemente, die sich für die Erfindung eignen vermitteln u. a. folgende Veröffentlichungen: EP 1 415 056, EP 1 420 125, DE 20 2006 019 869, EP 2 049 749, EP 2 000 610, WO 01/51732 und WO 2008/004960.

Ein Beispiel für ein Fußbodenpaneel 35 ist schematisch in Fig. 8 dargestellt. Das Fußbodenpaneel 35 weist ein erstes Paar 36 gegenüberliegender Verriegelungskanten auf sowie ein zweites Paar 37 einander gegenüberliegender Verriegelungskanten. Die Verriegelungskanten des ersten Paares 36 unterscheiden von den Verriegelungskanten des zweiten Paares 37.

Das erste Paar 36 weist eine Formschlusskante 36a mit einem Nutprofil 7 (gemäß Fig. 5) auf und eine Formschlusskante 36b mit einem Federprofil 12 (gemäß Fig. 5).

Das zweite Paar 37 mit Verriegelungskanten weist eine Formschlusskante 37a mit einem unteren Hakenprofil 21 (gemäß Fig. 7) auf und eine Formschlusskante 37b mit einem oberen Hakenprofil 26 (gemäß Fig. 7). Das untere Hakenprofil 21 ist mit einem separaten Sperrelement 33 versehen.

Bei der Anbringung eines neuen Fußbodenpaneel 35 an einem bereits begonnen Fußbodenbelag, dass heißt an einem Fußbodenbelag, der einer vorherigen Reihe mit Fußbodenpaneelen 35 und wenigstens einem Fußbodenpaneel 35 in derselben Reihe aufweist, kann die Formschlusskante 36b durch Herabschwenken des neuen Fußbodenpaneels 35 (gemäß Fig. 5) verbunden werden, wobei gleichzeitig die Formschlusskante 37b des neuen Fußbodenpaneels 35 mit einer Formschlusskante 37a des bereits in derselben Paneelreihe vorhandenen Fußbodenpaneels verriegelt wird.

### Bezugszeichenliste

- 1: Platte
- 1': Plattenstück
- 1": Plattenstück
- 2: Trägerschicht
- 2a: Trennfläche
- 2b: Trennfläche
- 3: Weichelastische Nutzschicht
- 3a: Trennfläche
- 3b: Trennfläche
- 4: Sägeblatt
- 5: Fußbodenpaneel
- 6: Formschlusskante
- 6a: Fugendichtungsbereich
- 7: Nutprofil
- 7a: obere Nutwand
- 7b: untere Nutwand
- 8: Hinterschneidung
- 8a: Horizontalverriegelungsfläche
- 9: Stauchungsbereich
- 9a: Dichtungslippe
- 9b: Spitze
- 10: Fußbodenpaneel
- 11: Formschlusskante
- 11a: Fugendichtungsbereich
- 12: Federprofil
- 13: Hinterschneidung
- 13a: Horizontalverriegelungsfläche
- 14: Weichelastische Nutzschicht
- 15: Stauchungsbereich
- 15a: Dichtungslippe
- 15b: Spitze
- 16: Fußbodenpaneel
- 17: Trägerschicht
- 18: Weichelastische Nutzschicht
- 19: Verriegelungskante
- 20: Formschlusskante
- 21: Unteres Hakenprofil
- 22: Fußbodenpaneel
- 23: Trägerschicht
- 24: Weichelastische Nutzschicht
- 25: Formschlusskante
- 26: Oberes Hakenprofil
- 27: Horizontalverriegelungsfläche
- 28: Horizontalverriegelungsfläche
- 29: Fugendichtungsbereich
- 30: Stauchungsbereich
- 30a: Dichtungslippe
- 31: Fugendichtungsbereich
- 32: Stauchungsbereich
- 32a: Dichtungslippe
- 33: Separates Sperrelement
- 34: Nut
- 34a: Nutöffnung
- 34b: Nutgrund
- 35: Fußbodenpaneel
- 36: erstes Paar Verriegelungskanten
- 36a: Formschlusskante
- 36b: Formschlusskante
- 37: zweites Paar Verriegelungskanten
- 37a: Formschlusskante
- 37b: Formschlusskante

## Patentansprüche

1. Fußbodenpaneel (5, 10, 16, 22, 35) umfassend eine Trägerschicht (2, 17, 23), eine aus einem weichelastischen Material gebildete Nutzschicht (3, 14, 18, 24) sowie wenigstens zwei einander gegenüberliegende Paare (36, 37) von Verriegelungskanten, wobei zumindest die Verriegelungskanten eines Paares als Formschlusskanten (6, 11, 20, 25) ausgebildet und so gestaltet sind, dass zwei der Fußbodenpaneele (5, 10, 16, 22, 35) mittels dieser Formschlusskanten (6, 11, 20, 25) verbindbar sind, und wobei die Formschlusskanten (6, 11, 20, 25) je eine Horizontalverriegelungsfläche (8a, 13a, 27, 28) aufweisen, die im verbundenen Zustand gemeinsam einem Auseinanderbewegen der Fußbodenpaneele (5, 10, 16, 22, 35) in einer Richtung entgegenwirken, die in der Fußbodenebene und senkrecht zu den Formschlusskanten (6, 11, 20, 25) liegt, wobei jede Formschlusskante (6, 11, 20, 25) im Bereich der weichelastischen Nutzschicht (3, 14, 18, 24) einen Fugendichtungsbereich (6a, 11a, 29, 31) aufweist, wobei die Formschlusskante (20) mit einem unteren Hakenprofil (21) und die komplementäre Formschlusskante (25) mit einem oberen Hakenprofil (26) versehen ist, so dass die Hakenprofile (21) und (26) mittels einer vertikalen Bewegung beziehungsweise mittels einer vertikalen Bewegungskomponente miteinander zu verhaken sind, wobei die Horizontalverriegelungsflächen (8a, 13a, 27, 28) und die Fugendichtungsbereiche (6a, 11a, 29, 31) so aufeinander abgestimmt sind, dass im verbundenen Zustand zweier Fußbodenpaneele (5, 10, 16, 22, 35) eine Vorpressung der Fugendichtungsbereiche (6a, 11a, 29, 31) gegeneinander und dadurch im Bereich der weichelastischen Nutzschicht (3, 14, 18, 24) eine dicht gepresste Fuge (F) erzeugbar ist, wobei die Fugendichtungsbereiche (6a, 11a, 29, 31) jeweils als Dichtungslippen ausgebildete hervorstehende Stauchungsbereiche sind und nahe an der Oberseite der Nutzschicht in einer Spitze enden, wobei die Kontur des Fugendichtungsbereichs der Nutzschicht eine relativ zur Nutzoberfläche schräg angeordnete Fläche ist, und wobei diese schräg angeordnete Fläche zur Nutzoberfläche hin spitz zuläuft.

2. Fußbodenpaneel nach Anspruch 1, **dadurch gekennzeichnet, dass** zumindest an einer der Formschlusskanten (6, 11, 20, 25) der Fugendichtungsbereich (6a, 11a, 29, 31) der weichelastischen Nutzschicht (3, 14, 18, 24) mit einem Klebemittel versehen ist.

3. Fußbodenpaneel nach Anspruch 2, **dadurh gekennzeichnet**, dass das Klebemittel während der Verlegung der Fußbodenpaneele (5, 10, 16, 22, 35) aktivierbar ist.

4. Fußbodenpaneel nach Anspruch 3, **dadurch gekennzeichnet, dass** das Klebemittel zwei Klebemittelkomponenten aufweist.

5. Fußbodenpaneel nach Anspruch 4, **dadurch gekennzeichnet, dass** die erste Klebemittelkomponente im Fugendichtungsbereich (6a, 11a, 29, 31) einer ersten Formschlusskante (6, 11, 20, 25) des Fußbodenpaneels (5, 10, 16, 22, 35) vorgesehen ist, und dass die zweite Klebemittelkomponente im Fugendichtungsbereich der gegenüberliegenden zweiten Formschlusskante (6, 11, 20, 25) des Fußbodenpaneels (5, 10, 16, 22, 35) vorgesehen ist.

## Claims

1. Floor panel (5, 10, 16, 22, 35) comprising a carrier layer (2, 17, 23), a wear layer (3, 14, 18, 24) made of a soft/ resilient material, and at least two opposite pairs (36, 37) of locking edges, where at least the locking edges of one pair are designed as form-fitting edges (6, 11, 20, 25) and in such a way that two floor panels (5, 10, 16, 22, 35) can be connected by means of these form-fitting edges (6, 11, 20, 25), and where the form-fitting edges (6, 11, 20, 25) each display a horizontal locking surface (8a, 13a, 27, 28) which, in connected state, together counteract separation of the floor panels (5, 10, 16, 22, 35) in a direction lying in the floor plane and perpendicular to the form-fitting edges, where each form-fitting edge (6, 11, 20, 25) displays a joint-sealing area (6a, 11a, 29, 31) in the area of the soft/resilient wear layer (3, 14, 18, 24), wherein the form-fitting edge (20) is provided with a lower hook profile (21) and complementary locking edge (25) is provided with an upper hook profile (26), so that the hook profiles (21) and (26) are to be hooked together by means of a vertical movement or by means of a vertical movement component, respectively, wherein in that the horizontal locking surfaces (8a, 13a, 27, 28) and the joint-sealing areas (6a, 11a, 29, 31) are coordinated in such a way that, in connected state of two floor panels (5, 10, 16, 22, 35), initial compression of the joint-sealing areas (6a, 11a, 29, 31) against each other can be produced and, as a result, a tightly sealed joint (F) in the area of the soft/resilient wear layer (3, 14, 18, 24), wherein the joint sealing areas (6a, 11a, 29, 31) are each projecting compression areas formed as sealing lips and end in a tip close to the top surface of the wear layer, wherein the contour of the joint sealing area of the wear layer is a surface inclined relative to the wear surface, and wherein this inclined surface is tapering to a tip towards the wear surface.

2. Floor panel according to one of Claims 1, **characterised in that** the joint-sealing area (6a, 11a, 29, 31) of the soft/resilient wear layer (3, 14, 18, 24) is provided with an adhesive, at least on one of the form-fitting edges (6, 11, 20, 25).

3. Floor panel according to Claim 2, **characterised in that** the adhesive can be activated during laying of the floor panels (5, 10, 16, 22, 35).

4. Floor panel according to Claim 3, **characterised in that** the adhesive displays two adhesive components.

5. Floor panel according to Claim 4, **characterised in that** the first adhesive component is provided in the joint-sealing area (6a, 11a, 29, 31) of a first form-fitting edge (6, 11, 20, 25) of the floor panel (5, 10, 16, 22, 35), and **in that** the second adhesive component is provided in the joint-sealing area of the opposite, second form-fitting edge (6, 11, 20, 25) of the floor panel (5, 10, 16, 22, 35).

## Revendications

1. Panneau de plancher (5, 10, 16, 22, 35) comprenant une couche support (2, 17, 23), une couche d'usure formée à base d'un matériau élastique souple (3, 14, 18, 24) ainsi qu'au moins deux paires (36, 37) mutuellement opposées de bords de verrouillage, au moins les bords de verrouillage d'une paire étant configurés comme bords à complémentarité de forme (6, 11, 20, 25) et conçus de sorte que deux des panneaux de plancher (5, 10, 16, 22, 35) puissent être reliés au moyen de ces bords à complémentarité de forme (6, 11, 20, 25) et les bords à complémentarité de forme (6, 11, 20, 25) présentant chacun une surface de verrouillage horizontal (8a, 13a, 27, 28), qui, à l'état relié, s'opposent ensemble à un mouvement de séparation des panneaux de plancher (5, 10, 16, 22, 35) dans un sens qui se situe dans le plan du plancher et est perpendiculaire aux bords à complémentarité de forme (6, 11, 20, 25), chaque bord à complémentarité de forme (6, 11, 20, 25) présentant au niveau de la couche d'usure élastique souple (3, 14, 18, 24) une zone d'étanchéité de joint (6a, 11a, 29, 31), le bord à complémentarité de forme (20) étant muni d'un profilé inférieur en crochet (21) et le bord à complémentarité de forme complémentaire (25) étant muni d'un profilé supérieur en crochet (26), de sorte que les profilés en crochet (21) et (26) peuvent être accrochés l'un à l'autre au moyen d'un mouvement vertical respectivement d'une composante de mouvement verticale, les surfaces de verrouillage horizontal (8a, 13a, 27, 28) et les zones d'étanchéité de joint (6a, 11a, 29, 31) étant adaptées les unes aux autres de sorte que lorsque deux panneaux de plancher (5, 10, 16, 22, 35) sont reliés, une précompression des zones d'étanchéité de joint (6a, 11a, 29, 31) l'une contre l'autre puisse se former et qu'un joint (F) comprimé de façon étanche puisse être ainsi généré au niveau de la couche d'usure élastique souple (3, 14, 18, 24), les zones d'étanchéité de joint (6a, 11a, 29, 31) étant chacune des zones d'écrasement dépassant sous forme de lèvre d'étanchéité et se terminant sous forme de pointe à proximité de la face supérieure de la couche d'usure, le contour de la zone d'étanchéité de joint de la couche d'usure étant une surface disposée obliquement relativement à la surface d'usure et cette surface disposée obliquement se terminant en pointe vers la surface d'usure.

2. Panneau de plancher selon la revendication 1,
**caractérisé en ce qu'** au moins au niveau de l'un des bords à complémentarité de forme (6, 11, 20, 25), la zone d'étanchéité de joint (6a, 11a, 29, 31) de la couche d'usure élastique souple (3, 14, 18, 24) est munie d'un adhésif.

3. Panneau de plancher selon la revendication 2,
**caractérisé en ce que** l'adhésif est activable pendant la pose des panneaux de plancher (5, 10, 16, 22, 35).

4. Panneau de plancher selon la revendication 3,
**caractérisé en ce que** l'adhésif présente deux composants adhésifs.

5. Panneau de plancher selon la revendication 4, **caractérisé en ce que** le premier composant adhésif est prévu dans la zone d'étanchéité de joint (6a, 11a, 29, 31) d'un premier bord à complémentarité de forme (6, 11, 20, 25) du panneau de plancher (5, 10, 16, 22, 35) et que le deuxième composant adhésif est prévu dans la zone d'étanchéité de joint du deuxième bord à complémentarité de forme opposé (6, 11, 20, 25) du panneau de plancher (5, 10, 16, 22, 35) .
